# EUROPEAN PATENT APPLICATION

(11) **EP 2 860 983 A1**
(43) Date of publication of application: **15.04.2015**
(21) Application number: 13804272.6
(22) Date of filing: 12.06.2013
(51) Int. Cl.: H04N 21/27, G06F 9/44

(54) **METHOD FOR PROVIDING INTERLOCKING APPLICATION IN ANDROID PLATFORM-BASED RECEIVER**

(30) Priority: 12.06.2012 KR 20120062482
(71) Applicant: Anypoint Media Group, Seoul 153-782 (KR)
(72) Inventor: BAEK, Wonjang, Seongnam-si Gyeonggi-do 463-731 (KR)
(74) Representative: Müller, Wolfram Hubertus
(86) International application number: PCT/KR2013/005161
(87) International publication number: WO 2013/187684

(57) **Abstract**

Provided is a method of providing an associated application in an Android platform-based receiver, including (a) obtaining identification information including at least one of current channel information and current program information of a digital broadcast; (b) obtaining and executing an associated Android application associated with the digital broadcast selected from a plurality of Android applications based on an attribute information included in each of the plurality of Android applications and the identification information; and (c) changing a state of the associated Android application based on an event when the event is received. Accordingly, an associated Android application, the life cycle of which is managed while associated with a digital broadcast and which is personalized for a user based on attributes or a pre-designed associated condition, is provided.

## Description

### [Technical Field]

The present invention relates to a method of providing an associated application in an Android platform-based receiver, and more particularly, to a method of providing an associated application, which is personalized for a user and the life cycle of which is managed while associated with a digital broadcast based on attributes or a pre-designed associated condition, in an Android platform-based receiver.

### [Background Art]

Unlike existing analog broadcast receivers, a digital broadcast receiver is capable of receiving and providing an application transmitted together with a program (i.e., a video) through a digital broadcast while providing the digital broadcast.

In the present disclosure, the term "digital broadcast" should be understood as including at least one of a digital terrestrial broadcast, a digital cable broadcast, a digital satellite broadcast, an over-the-top (OTT) service, an Internet protocol television (IPTV) service, a video on-demand (VOD) service provided in real time or semi-real time, and digital multimedia broadcasting (DMB). The term "digital broadcast receiver" should be understood as a device capable of receiving a program signal (i.e., a video signal) which is a digital broadcast signal via a broadcast network or a communication network, signal-processing the program signal, and providing a video.

The digital broadcast receiver includes a receiving unit that receives and processes a digital broadcast signal, and a display unit that displays the processed digital broadcast signal in the form of video. For example, the digital broadcast receiver may additionally include a receiving unit such as a set-top box and a display unit such as a screen. Also, the digital broadcast receiver may have a structure in which a receiving unit and a display unit are integrally formed.

The existing digital broadcast receivers may receive and execute an application transmitted together with a program signal via a broadcast network or a communication network. Hereinafter, the term "in-band application" should be understood as an application transmitted together with a program signal via a broadcast network or a communication network. In general, the in-band application is repeatedly transmitted in the form of an object carousel via a broadcast network or a communication network. When in-band applications are to be repeatedly transmitted in the form of an object carousel, the size and number of in-band applications are limited. For example, in the case of a terrestrial digital broadcast, a program signal and an in-band application in the form of an object carousel are transmitted within a limited transmission bandwidth designated with respect to a channel. Thus, the size and number of in-band applications are limited. Thus, the existing digital broadcast receivers may provide about one in-band application per channel and about one in-band application per program. Accordingly, since the same in-band application is provided to all users, it is difficult to provide an application personalized according to an individual user's taste.

The Android platform is a software platform developed by Google to drive various applications developed in the Java language. Although the Android platform has been developed to operate smartphones, various applications are present therefor. Recently, the Android platform has been employed in various devices such as TVs, set-top boxes, navigation devices, content reproduction devices, etc. That is, since various applications developed using the Android platform can be executed in a TV, a set-top box, etc., attempts have been made to manufacture a digital broadcast receiver using the Android platform.

However, since the Android platform has basically been developed to operate smartphones, an application cannot be provided in association with a program, particularly in a digital broadcast. In particular, in order to provide an associated application, the life cycle of an Android application should be dynamically managed in association with a digital broadcast. However, the life cycle of the existing Android platform cannot be managed in association with a digital broadcast.

### (Prior art documents)

Patent document 1: Korean Registered Patent No. 10-1104860
Patent document 2: Korean Registered Patent No. 10-1015573

### [Disclosure]

### [Technical Problem]

The present invention is directed to a method of providing an Android application in an Android platform-based receiver, which is capable of providing an associated Android application which is personalized for a user and the life cycle of which is managed in association with a digital broadcast based on attributes or a pre-designed associated condition.

### [Technical Solution]

One aspect of the present invention provides a method of providing an associated application performed in an Android platform-based receiver, including: (a) obtaining identification information including at least one of current channel information and current program information of a digital broadcast; (b) obtaining and executing an associated Android application associated with the digital broadcast selected from a plurality of Android applications based on an attribute information included in each of the plurality of Android applications and the identification information; and (c) changing a state of the associated Android application based on an event when the event is received.

In the method of providing an associated application, the digital broadcast may be received by the Android platform-based receiver in real time or semi-real time via a broadcast network or a communication network.

In the method of providing an associated application, the step (b) may include designating one of the plurality of Android applications including an attribute information matching the identification information as the associated Android application.

In the method of providing an associated application, the step (b) may include extracting and displaying information regarding at least one of the plurality of Android applications including an attribute information matching the identification information; and designating an Android application selected from the at least one of Android application based on user input as the associated Android application.

In the method of providing an associated application, the attribute information may include at least one of: associated channel information including channel identification information; associated program information including program identification information; and associated condition information.

In the method of providing an associated application, the associated condition information may include at least one of: a condition for executing the associated Android application in a predetermined cycle; a condition for executing the associated Android application when a command to execute the associated Android application is received via a broadcast network or a communication network; and a condition for executing the associated Android application designated as default by a user, and the step (b) may include designating one of the plurality of Android applications including attribute information matching the associated condition information as the associated Android application when the associated condition information is satisfied.

In the method of providing an associated application, the step (b) may include automatically executing the associated Android application.

In the method of providing an associated application, the step (b) may include receiving the associated Android application by establishing communication with a server providing the plurality of Android applications.

The method of providing an associated application may further include (d) storing at least some of the plurality of Android applications in the Android platform-based receiver.

In the method of providing an associated application, the step (b) may include designating one of the at least some Android applications stored in the Android platform-based receiver as the associated Android application.

In the method of providing an associated application, the event may include at least one of: a command to change a channel of the digital broadcast; a command to change a program of the digital broadcast; and a command to execute one of the plurality of Android applications other than the associated Android application, and the step (c) may include switching the state of the associated Android application to a continuous execution state, a pause state, a termination state, and a background running state according to the event.

The method of providing an associated application may further include (e) maintaining a list of relationships between the plurality of Android applications and each channel or each program of the digital broadcast.

In the method of providing an associated application, the step (b) may further include displaying a user interface for selecting the associated Android application from the plurality of Android applications based on the list and the identification information; and designating one of the plurality of Android applications as the associated Android application according to user input through the user interface.

### [Advantageous Effects]

According to the present invention, an associated Android application which is personalized for a user and the life cycle of which is managed in association with a digital broadcast based on attributes or a pre-designed associated condition may be provided.

Also, an Android application associated with a digital broadcast may be provided to a viewer while minimizing an application developer or a broadcaster's burden of having to additionally develop and provide an application for the digital broadcast.

Also, a viewer may be provided with an associated Android application designated by the viewer when a pre-designed associated condition is satisfied, thereby providing a personalized associated Android application.

Also, an associated Android application designated by a platform provider may be provided to a viewer when a pre-designed associated condition is satisfied, and thus the platform provider may increase an effect of providing or advertising information.

### [Description of Drawings]

FIG. 1 is a block diagram of a system environment in which a method of providing an associated application in an Android platform-based receiver is performed, according to an embodiment of the present invention.
FIG. 2 is a flowchart of a method of providing an associated application in an Android platform-based receiver according to an embodiment of the present invention.
FIGS. 3 to 8 are detailed flowcharts of various examples of operation S200 included in a method of providing an associated application in an Android platform-based receiver according to an embodiment of the present invention.
FIG. 9 is a detailed flowchart of operation S300 included in a method of providing an associated application in an Android platform-based receiver according to an embodiment of the present invention.
FIG. 10 is a diagram illustrating a list of Android applications related to a channel and programs of a digital broadcast in a method of providing an associated application in an Android platform-based receiver according to an embodiment of the present invention.
FIG. 11 illustrates examples of a user interface for selecting an associated Android application selected from a plurality of Android applications in a method of providing an associated application in an Android platform-based receiver according to an embodiment of the present invention.

### [Best Mode of the Invention]

Hereinafter, a method of providing an associated application in an Android platform-based receiver according to an embodiment of the present invention will be described in detail with reference to the accompanying drawings.

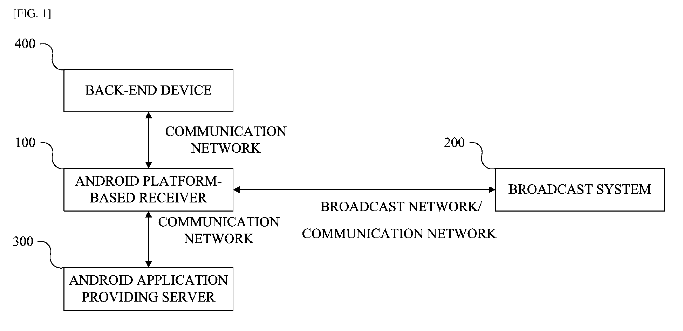

FIG. 1 is a block diagram of a system environment in which a method of providing an associated application in an Android platform-based receiver is performed, according to an embodiment of the present invention.

Referring to FIG. 1, a system environment in which a method of providing an associated application in an Android platform-based receiver is performed according to an embodiment of the present invention includes an Android platform-based receiver 100, a broadcast system 200, and an Android application providing server 300. The system environment may further include a back-end device 400.

The Android platform-based receiver 100 is a digital broadcast receiver that operates based on the Android platform, and receives a digital broadcast signal from the broadcast system 200 via a broadcast network or a communication network, signal-processes the digital broadcast signal, and provides a video. Furthermore, the Android platform-based receiver 100 may receive an Android application from the Android application providing server 300 and execute it, or execute an Android application stored in the Android platform-based receiver 100.

In the present disclosure, an Android application should be understood as an application made based on the Android platform. Particularly, the Android application is provided to be associated with a digital broadcast while the digital broadcast is provided in the Android platform-based receiver 100. The Android application may be received via a network or a frequency band that is different from a network or a frequency band used to provide the digital broadcast.

According to an embodiment of the present invention, an Android application may be configured in association with a digital broadcast, based on an additional attribute definition, etc. That is, an Android application according to an embodiment of the present invention may further include information regarding a channel or programs of a digital broadcast with which the Android application is to be executed while associated, or information regarding other associated conditions, unlike existing general Android applications.

For example, an Android application may be provided in association with a specific channel or programs of a digital broadcast. For example, the Android platform-based receiver 100 may provide an Android application in a portion of a screen thereof while providing a digital broadcast or may provide the Android application to overlap with a screen in which the digital broadcast is provided. Also, according to an embodiment of the present invention, an Android application associated with a specific channel or program of a digital broadcast is configured to occupy only a portion of a screen at least at an initial execution stage of the Android application or during execution of the Android application so that a user may be provided with the Android application while viewing the digital broadcast. Accordingly, the Android application according to an embodiment of the present invention is different from existing Android applications that occupy the entire screen starting from an initial execution stage thereof.

Existing in-band applications are transmitted together with a digital broadcast signal from the broadcast system 200 via a broadcast network or a communication network. For example, in the case of a terrestrial digital broadcast, existing digital broadcast receivers receive a digital broadcast signal and an in-band application using ground waves. Thus, the size and number of in-band applications that may be provided from the existing digital broadcast receivers are limited.

In contrast, for example, the Android platform-based receiver 100 receives a digital broadcast signal from the broadcast system 200 via a ground-wave broadcast network, and receives an Android application from the Android application providing server 300 via a communication network that is different from the ground-wave broadcast network. Thus, the Android application is provided independently from the digital broadcast signal. Accordingly, Android applications are limited less than the in-band application in terms of the size and numbers thereof.

The broadcast system 200 transmits a digital broadcast signal. For example, a digital ground-wave provider, a digital cable broadcaster, or an IPTV provider may operate the broadcast system 200. Otherwise, the broadcast system 200 may be operated by a business operator who manages a set-top box, i.e., a subject who may also be referred to as a platform business operator in the present invention.

The Android application providing server 300 stores a plurality of Android applications, is connected to the Android platform-based receiver 100 via a communication channel, and transmits an Android application selected from the plurality of Android applications to the Android platform-based receiver 100 according to a request from the Android platform-based receiver 100. The Android application providing server 300 may be operated by a digital broadcaster or a subject who operates the Android platform-based receiver 100 (i.e., the platform business operator described above), or may be operated by other subjects.

The back-end device 400 provides additional information required to execute an Android application. For example, the back-end device 400 stores extended EPG data, closed-caption (CC) data, or metadata regarding a digital broadcast program, and provides the data to the Android platform-based receiver 100. In the case of existing digital broadcasts, EPG data, CC data, or metadata is transmitted together with a digital broadcast signal, but according to an embodiment of the present invention, the additionally configured back-end device 400 may provide the data.

Referring to FIG. 1, an Android application is transmitted to the Android platform-based receiver 100 from the Android application providing server 300 rather than the broadcast system 200. Thus, the system environment according to an embodiment of the present invention is differentiated from an existing digital broadcast environment in which only the broadcast system 200 provides an in-band application. Also, in the system environment according to an embodiment of the present invention, the Android platform-based receiver 100 may provide at least one Android application.

### [Modes of the Invention]

A method of providing an associated application in an Android platform-based receiver according to an embodiment of the present invention will be described in detail below with reference to FIG. 1.

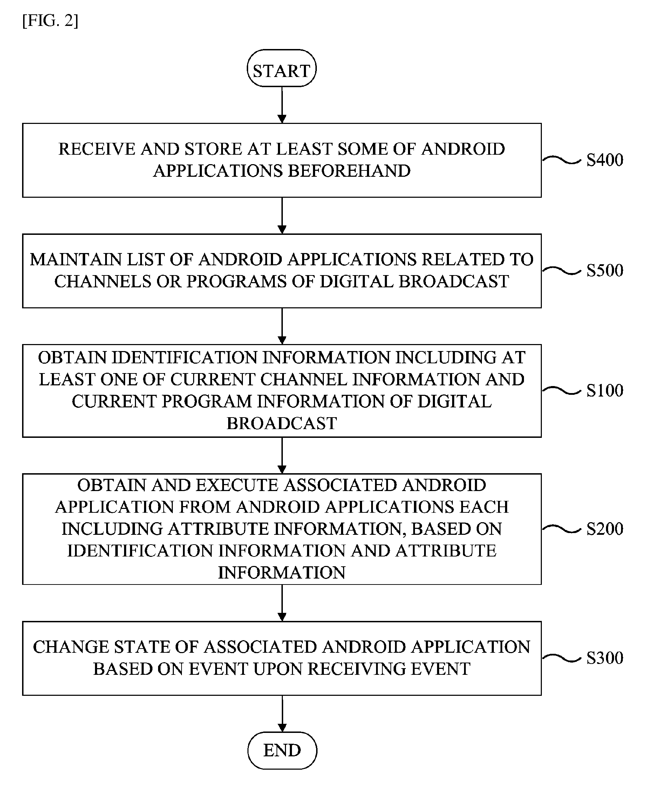

FIG. 2 is a flowchart of a method of providing an associated application in an Android platform-based receiver according to an embodiment of the present invention.

First, the Android platform-based receiver 100 obtains identification information including at least one of current channel information of a current channel of a digital broadcast and current program information of a current program of the digital broadcast (operation S100).

As described above, the Android platform-based receiver 100 is a digital broadcast receiver operating based on the Android platform, and receives and provides a digital broadcast in real time or semi-real time via a broadcast network or a communication network. That is, the Android platform-based receiver 100 receives and provides at least one digital broadcast of a digital ground-wave broadcast, a digital cable broadcast, a digital satellite broadcast, an OTT service, an IPTV service, a VOD service provided in real time or semi-real time, and DMB.

The Android platform-based receiver 100 may extract, for example, at least one of channel information and program information from a digital broadcast signal as the current channel information and the current program information of the digital broadcast.

Next, the Android platform-based receiver 100 obtains and executes an associated Android application associated with the digital broadcast selected from a plurality of Android applications each including attribute information, based on the identification information obtained in operation S100 and the attribute information of each of the plurality of Android applications (operation S200).

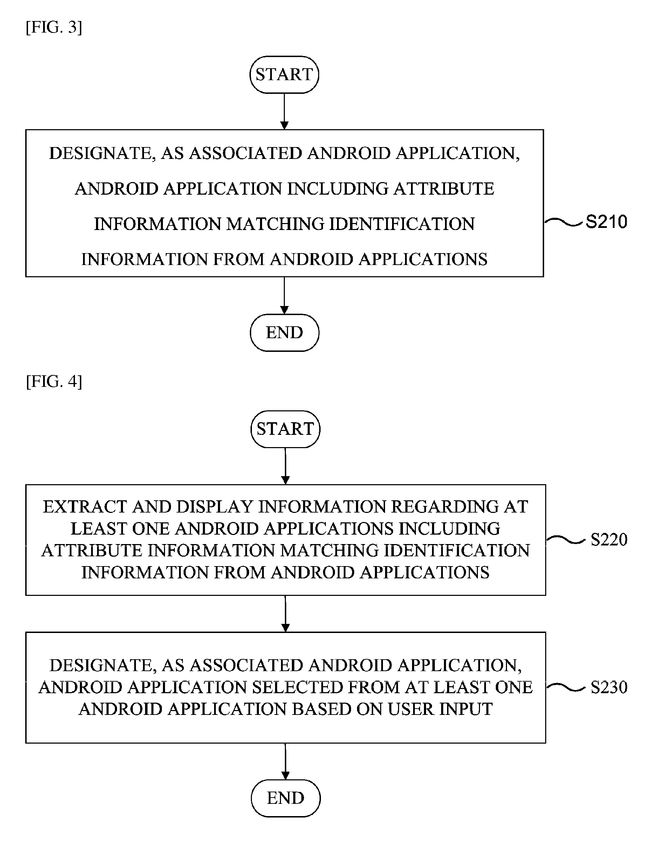

FIGS. 3 to 8 are detailed flowcharts of various examples of operation S200 included in a method of providing an associated application in an Android platform-based receiver according to an embodiment of the present invention.

As described above, each of a plurality of Android applications includes attribute information.

The attribute information may be, for example, at least one of associated channel information including channel identification information, associated program information including program identification information, and associated condition information.

The associated channel information is information enabling a specific channel of a digital broadcast to be associated with a specific Android application.

The associated program information is information enabling a specific program of a digital broadcast to be associated with a specific Android application.

Through the associated condition information, a specific Android application may be designated in association with a condition designated by a platform business operator regardless of a specific channel or program of a digital program, or may be designated in association with the specific channel or program of the digital program by a user.

In detail, according to the associated condition information, an associated Android application is executed when a condition including at least one of a condition for executing an Android application in a predetermined cycle, a condition for executing an Android application when a command to execute the Android application is received via a broadcast network or a communication network, a condition for executing an Android application designated as default by a user is satisfied.

The attribute information may be designated by a platform business operator or a broadcaster. For example, the platform business operator who operates the Android platform-based receiver 100 manufactures an Android application by developing an Android application matching a channel or program of a digital broadcast or receiving an Android application from a broadcaster, and adding the attribute information to the Android application.

Otherwise, when a platform business operator provides a space for distributing Android applications developed by various developers, for example, in the form of an application market, an Android application manufacturer (or a content provider) may designate and register the attribute information when his/her Android application is to be registered and distributed.

That is, an individual developer other than a platform business operator or a broadcaster may also register an associated Android application to an Android application market operated by the platform business operator, the associated Android application may be distributed by the platform business operator, and a profit of sale of the associated Android application may be shared between the platform business operator and the individual developer.

The associated condition information may be designated by a platform business operator or a user of the Android platform-based receiver 100. In particular, when the associated condition information is designated by the user of the Android platform-based receiver 100, the attribute information may include both types of attribute information, e.g., the associated program information and the associated condition information, or the associated channel information and the associated condition information.

The Android platform-based receiver 100 designates, as the associated Android application, an Android application including attribute information matching the identification information selected from a plurality of Android applications, and executes the associated Android application (operation S210 of FIG. 3).

In detail, the Android platform-based receiver 100 designates, for example, as an associated Android application, an Android application including attribute information including program identification information matching the current program information obtained in operation S100 selected from a plurality of Android applications, and executes the associated Android application.

Otherwise, the Android platform-based receiver 100 designates, as an associated Android application, for example, an Android application including attribute information including channel identification information matching the current channel information obtained in operation S100 selected from a plurality of Android applications, and executes the associated Android application.

In particular, when an Android application including attribute information including program identification information matching the current program information obtained in operation S100 is not present among the plurality of Android applications, the Android platform-based receiver 100 may designate, as an associated Android application, an Android application including attribute information including channel identification information matching the current channel information obtained in operation S100, and execute the associated Android application.

That is, when a plurality of Android applications each including attribute information matching the identification information are present among the plurality of Android applications, an Android application including attribute information including program identification information matching the current program information may be designated as an associated Android application more preferentially than the other Android applications.

Otherwise, when at least one Android application (preferably two or more Android applications) including attribute information matching the identification information is present selected from a plurality of Android applications, information regarding the at least one Android application of the plurality of Android applications is extracted and displayed (operation S220 of FIG. 4). For example, the information regarding the at least one Android application may be displayed, for example, in the form of an icon.

Then, an Android application selected from the at least one Android application is designated as the associated Android application based on user input (operation S230 of FIG. 4).

That is, an associated Android application may be selected by assigning priority to a user's selection.

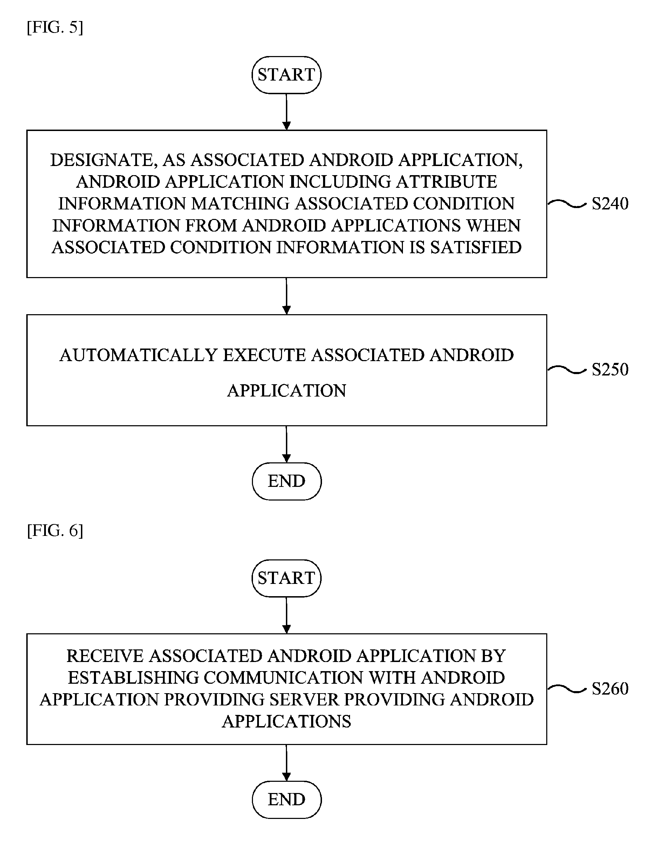

Otherwise, when the associated condition information is satisfied, the Android platform-based receiver 100 may designate, as the associated Android application, an Android application including attribute information matching the associated condition information selected from a plurality of Android applications, and execute the associated Android application (operation S240 of FIG. 5).

Specifically, when, for example, associated condition information instructs that an Android application #1 among twenty Android applications #1 to #20 be executed every ten minutes regardless of a current channel or a current program, the Android platform-based receiver 100 may designate the Android application #1 as the associated Android application and execute the associated Android application #1 every ten minutes.

Otherwise, for example, when a platform business operator transmits a command to execute the Android application #2 among the twenty applications #1 to #20 to the Android platform-based receiver 100 and the Android platform-based receiver 100 receives the command, the Android platform-based receiver 100 may designate the Android application #2 as the associated Android application and execute the associated Android application #2.

Otherwise, when a user designates the Android application #10 to be executed by default for a current channel or a current program among the twenty Android applications #1 to #20, the Android platform-based receiver 100 may designate the Android application #10 as the associated Android application and execute the associated Android application #10.

When an Android application including attribute information matching associated condition information selected from a plurality of Android applications is designated and executed as the associated Android application, the Android platform-based receiver 100 may automatically execute the associated Android application (operation S250 of FIG. 5).

That is, it is possible to skip processes such as a process of extracting and displaying information regarding at least one Android application including attribute information matching the associated condition information selected from a plurality of Android applications, and designating, as the associated Android application, an Android application selected from the at least one Android application based on user input. The Android platform-based receiver 100 may automatically designate, as the associated Android application, an Android application including attribute information matching the associated condition information and execute the Android application.

Next, when an event is received during the execution of the associated Android application in operation S200, the Android platform-based receiver 100 changes a state of the associated Android application that is being executed in operation S200, based on the event (operation S300).

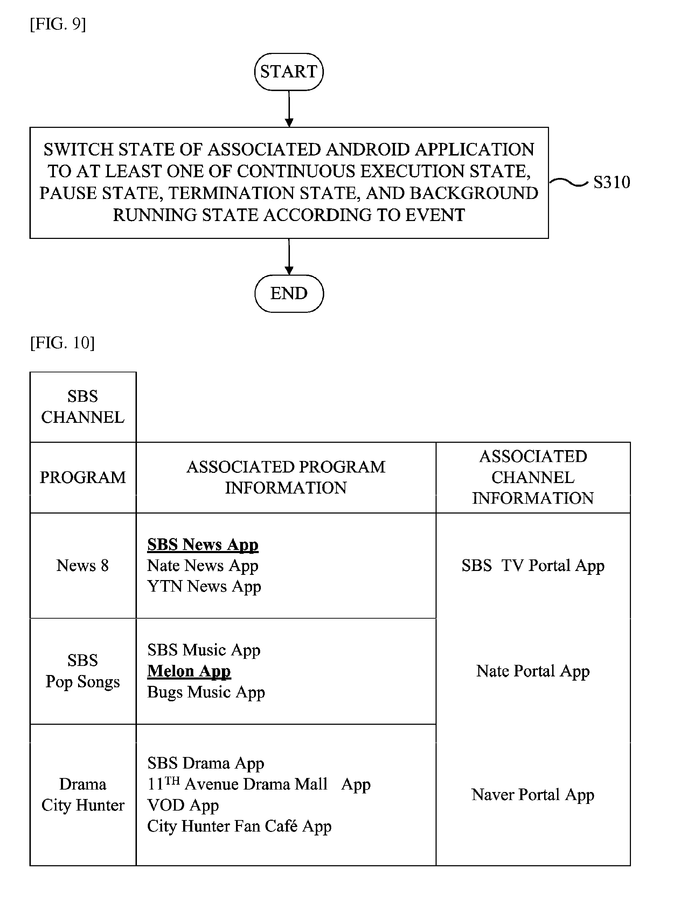

FIG. 9 is a detailed flowchart of operation S300 included in the method of providing an associated application in an Android platform-based receiver according to an embodiment of the present invention.

The event may include, for example, at least one of: a command to change a channel of a digital broadcast, a command to change a program of the digital broadcast (including a command to end execution of the program), and a command to execute an Android application other than the associated Android application that is being executed in operation S200 selected from a plurality of Android applications.

In this case, the Android platform-based receiver 100 changes the state of the associated Android application according to each event. For example, the Android platform-based receiver 100 may switch the state of the associated Android application that is being executed in operation S200 to at least one of a continuous execution state, a pause state, a termination state, and a background running state (S310 of FIG. 9).

For example, while the Android platform-based receiver 100 executes, as an associated Android application, an Android application including attribute information including program identification information matching the current program information, the associated Android application associated with the program corresponding to the current program information need not be executed any longer when the program is changed (including when the execution of the program is terminated). Accordingly, the Android platform-based receiver 100 may switch the state of the associated Android application associated with the program to, for example, the termination state.

While the Android platform-based receiver 100 executes, as an associated Android application, an Android application including attribute information including channel identification information matching the current channel information, the associated Android application associated with the channel corresponding to the current channel information need not be executed any longer when the channel is switched to another channel. Thus, the Android platform-based receiver 100 may switch the state of the associated Android application associated with the channel to, for example, the termination state. Otherwise, the Android platform-based receiver 100 may switch the state of the associated Android application associated with the channel to, for example, the pause state or the background running state, in consideration of a possibility of the other channel being switched to the channel corresponding to the current channel information.

While the Android platform-based receiver 100 designates, as the associated Android application, an Android application including attribute information matching the associated condition information and executes the Android application, the Android platform-based receiver 100 may switch the state of the associated Android application to at least one of the continuous execution state, the pause state, the termination state, and the background running state.

That is, an associated Android application matching an associated condition may be executed regardless of a change in a channel or a program. Thus, in this case, the Android platform-based receiver 100 may switch the state of the associated Android application to the continuous execution state or the background running state.

When a condition for executing the associated Android application by default to be associated with a specific program is designated by a user, the Android platform-based receiver 100 may switch the state of the associated Android application to the pause state or the termination state when the program is changed (including when execution of the program is terminated).

Referring back to FIG. 2, the method of providing an associated application in an Android platform-based receiver according to an embodiment of the present invention may further include storing at least some of the plurality of Android applications (operation S400).

That is, in operation S200, the Android platform-based receiver 100 may receive the associated Android application from the Android application providing server 300 in real time or semi-real time (operation S260 of FIG. 6).

However, in order to reduce a time required to receive an application or provide the application without a time delay, the Android platform-based receiver 100 may receive at least some Android applications beforehand from the Android application providing server 300 and store the at least some Android applications therein.

Operation S400 is particularly useful when an Android application includes attribute information of the associated channel information.

That is, an Android application that includes attribute information including the associated channel information is an associated Android application that may be executed whenever channels of a digital broadcast are changed. Thus, the Android platform-based receiver 100 may receive an associated Android application and store it therein beforehand rather than receiving an associated Android application from the Android application providing server 300 whenever channels are changed.

Also, operation S400 is also available when an Android application includes attribute information of associated condition information as described above.

For example, if an associated Android application is executed when an associated condition (a condition for executing an Android application in a predetermined cycle or a condition for executing an Android application when a command to execute the Android application is received via a broadcast network or a communication network) is satisfied, then the Android platform-based receiver 100 may receive the associated Android application and store it therein beforehand.

For example, if a platform business operator sets a condition for executing an Android application beforehand regardless of a specific channel or program of a digital broadcast and the Android application is executed, for example, every ten minutes or is executed when an instruction to execute the Android application is received from the platform business operator, the Android platform-based receiver 100 may receive the associated Android application and store it therein beforehand.

Also, when an associated condition includes a condition for executing an Android application by default designated by a user, the Android platform-based receiver 100 may receive the Android application and store it therein beforehand.

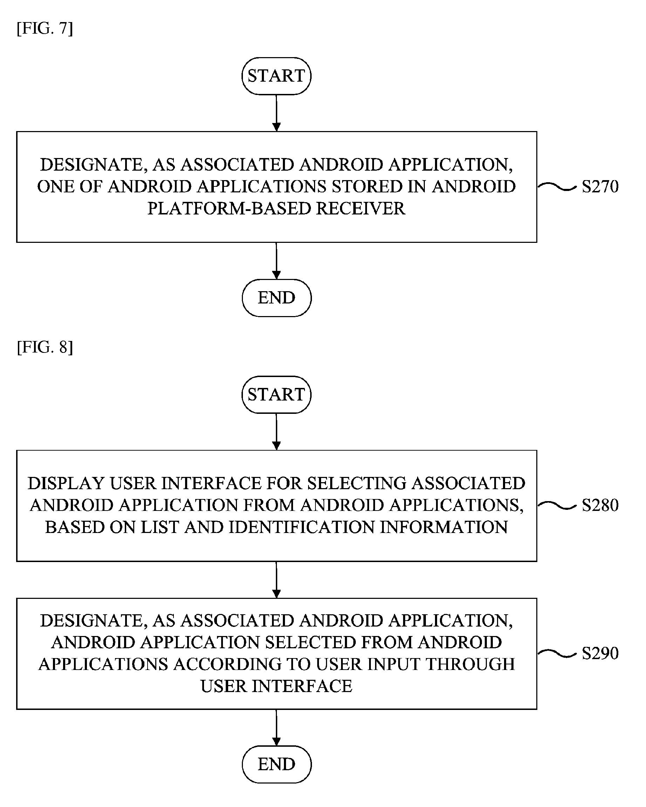

In this case, in operation S200, the Android platform-based receiver 100 may designate and execute one of stored Android applications as the associated Android application (operation S270 of FIG. 7).

Referring back to FIG. 2, the method of providing an associated application in an Android platform-based receiver according to an embodiment of the present invention may further include maintaining a list of relationships between the plurality of Android applications and each channel or each program of the digital broadcast (operation S500).

In this case, operation S200 may be embodied as follows.

The Android platform-based receiver 100 displays a user interface for selecting the associated Android application from the plurality of Android applications, based on the list maintained in operation S500 and the identification information obtained in operation S100 (operation S280 of FIG. 8). Thereafter, the Android platform-based receiver 100 may designate, as the associated Android application, an Android application selected from the plurality of Android applications through the user interface according to user input (operation S290 of FIG. 8), and then execute the selected Android application.

FIG. 10 is a diagram illustrating a list of Android applications related to a channel and programs of a digital broadcast in a method of providing an associated application in an Android platform-based receiver according to an embodiment of the present invention.

Referring to FIG. 10, Android applications correspond to programs of a channel SBS of a digital broadcast.

For example, three Android applications "SBS News App," "Nate News App" and "YTN News App" each include, as attribute information, associated program information representing that these Android applications are associated with a program "News 8."

For example, three Android applications "SBS Music App," "Melon App" and "Bugs Music App" each include, as attribute information, associated program information representing that these Android applications are associated with a program "SBS Pop Songs."

For example, four Android applications "SBS Drama App," "11^{th} Avenue Drama Mall App," "VOD App" and "City Hunter Fan Café App" each include, as attribute information, associated program information representing that these Android applications are associated with a program "Drama City Hunter."

For example, three Android applications "SBS TV Portal App," "Nate Portal App" and "Naver Portal App" each include, as attribute information, associated program information representing that these Android applications are associated with the channel SBS.

For example, operations S280 and S290 of FIG. 8 may be performed based on the list of FIG. 10.

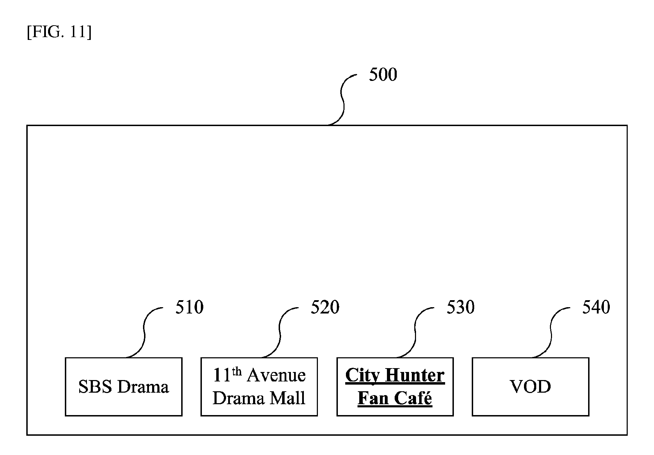

FIG. 11 illustrates examples of a user interface for selecting an associated Android application selected from a plurality of Android applications in a method of providing an associated application in an Android platform-based receiver according to an embodiment of the present invention.

In a user interface 500 of FIG. 11, in the case of the program "Drama City Hunter" program illustrated in FIG. 10, Android applications that can be selected by a user may be displayed in the form of titles or icons.

That is, four selection interfaces 510 to 540 for respectively selecting the Android applications "SBS Drama App," "11^{th} Avenue Drama Mall App," "City Hunter Fan Café App," and "VOD App" are illustrated in FIG. 11.

For example, when a user selects the "City Hunter Fan Café App" using the interface 530, the selected "City Hunter Fan Café App" is executed and provided in association with the program "Drama City Hunter."

Similarly, the user interface 500 of FIG. 11 may be used when operations S220 and S230 of FIG. 4 are performed.

Referring back to FIG. 10, the Android application **"SBS News App"** corresponding to the program "News 8" and the Android application **"Melon App"** corresponding to the program "SBS Pop Songs" program are underlined in bold type.

It is assumed herein that an Android application is designated by a user to be executed by default when the Android application is underlined in bold type. That is, it is assumed that the Android application "SBS News App" is executed by default for the "News 8" program and the Android application "Melon App" is executed by default for the 'the "SBS Pop Songs" program. That is, it is assumed that the Android application "SBS News App" matches associated condition information in the case of the "News 8" program and the Android application "Melon App" matches associated condition information in the case of the program "SBS Pop Songs."

In this case, the Android platform-based receiver 100 may automatically execute the Android application "SBS News App" in association with the program "News 8" when the program "News 8" is provided, and the Android application "Melon App" in association with the program "SBS Pop Songs" when the program "SBS Pop Songs" program is provided without displaying the user interface 500 of FIG. 11.

According to one or more of the above embodiments of the present invention, an associated Android application may be provided in such a manner that the associated Android application is personalized for a user and the life cycle of the associated Android application is managed in association with a digital broadcast, based on attributes or a pre-designed associated condition.

That is, for example, an Android application designated by a user may be provided as an associated application.

Also, a state of an associated Android application may be switched to at least one of a continuous execution state, a pause state, a termination state, and a background running state according to a type of an event that has occurred. Thus, the Android platform-based receiver 100 may terminate execution of the associated Android application when the associated Android application need not be associated with the digital broadcast any longer, thereby efficiently utilizing system resources.

In the related art, an application developer or a broadcaster should additionally develop and provide applications for a digital broadcast, but Android applications that are associated with a digital broadcast may be provided to a viewer in a simple manner by simply adding attribute information to the existing Android applications while minimizing an application developer or a broadcaster's burden of having to additionally develop and provide an application for the digital broadcast.

Also, when a pre-designed associated condition is satisfied, a viewer may be provided with an associated Android application designated by the viewer, thereby providing a personalized associated Android application.

Also, when a pre-designed associated condition is satisfied, a viewer may be provided with an associated Android application designated by a platform business operator and thus the platform business operator may increase an effect of providing or advertising information. That is, for example, in order to provide or advertise information, the platform business operator may provide an associated Android application to a viewer if needed.

While this invention has been particularly shown and described with reference to exemplary embodiments thereof, it will be understood by those of ordinary skill in the art that various changes in form and details may be made therein without departing from the spirit and scope of the invention as defined by the appended claims.

Thus, the exemplary embodiments should be considered in a descriptive sense only and not for purposes of limitation. Therefore, the scope of the invention is defined not by the detailed description of the invention but by the appended claims, and all differences within the scope will be construed as being included in the present invention.

### [Industrial Applicability]

According to the present invention, an associated Android application that is personalized for a user based on attributes thereof or a pre-designed associated condition and the life cycle of which is managed in association with a digital broadcast may be provided.

Also, an Android application that is associated with a digital broadcast may be provided to a viewer while minimizing an application developer or a broadcaster's burden of having to additionally develop and provide an application for the digital broadcast.

Also, a viewer may be provided with an associated Android application designated by the viewer when a pre-designed associated condition is satisfied, thereby providing a personalized associated Android application.

Also, an associated Android application designated by a platform provider may be provided to a viewer when a pre-designed associated condition is satisfied, and thus the platform provider may increase an effect of providing or advertising information.

## Claims

1. A method of providing an associated application performed in an Android platform-based receiver, comprising:
(a) obtaining identification information including at least one of current channel information and current program information of a digital broadcast;
(b) obtaining and executing an associated Android application associated with the digital broadcast selected from a plurality of Android applications based on an attribute information included in each of the plurality of Android applications and the identification information; and
(c) changing a state of the associated Android application based on an event when the event is received.

2. The method of claim 1, wherein the digital broadcast is received by the Android platform-based receiver in real time or semi-real time via a broadcast network or a communication network.

3. The method of claim 1, wherein the step (b) comprises designating one of the plurality of Android applications including an attribute information matching the identification information as the associated Android application.

4. The method of claim 1, wherein the step (b) comprises:
extracting and displaying information regarding at least one of the plurality of Android applications including an attribute information matching the identification information; and
designating an Android application selected from the at least one of Android application based on user input as the associated Android application.

5. The method of claim 1, wherein the attribute information comprises at least one of: associated channel information including channel identification information; associated program information including program identification information; and associated condition information.

6. The method of claim 5, wherein the associated condition information comprises at least one of: a condition for executing the associated Android application in a predetermined cycle; a condition for executing the associated Android application when a command to execute the associated Android application is received via a broadcast network or a communication network; and a condition for executing the associated Android application designated as default by a user, and
wherein the step (b) comprises designating one of the plurality of Android applications including attribute information matching the associated condition information as the associated Android application when the associated condition information is satisfied.

7. The method of claim 6, wherein the step (b) comprises automatically executing the associated Android application.

8. The method of claim 1, wherein the step (b) comprises receiving the associated Android application by establishing communication with a server providing the plurality of Android applications.

9. The method of claim 1, further comprising (d) storing at least some of the plurality of Android applications in the Android platform-based receiver.

10. The method of claim 9, wherein the step (b) comprises designating one of the at least some Android applications stored in the Android platform-based receiver as the associated Android application.

11. The method of claim 1, wherein the event comprises at least one of: a command to change a channel of the digital broadcast; a command to change a program of the digital broadcast; and a command to execute one of the plurality of Android applications other than the associated Android application, and
the step (c) comprises switching the state of the associated Android application to a continuous execution state, a pause state, a termination state, and a background running state according to the event.

12. The method of claim 1, further comprising (e) maintaining a list of relationships between the plurality of Android applications and each channel or each program of the digital broadcast.

13. The method of claim 12, wherein the step (b) further comprises:
displaying a user interface for selecting the associated Android application from the plurality of Android applications based on the list and the identification information; and
designating one of the plurality of Android applications as the associated Android application according to user input through the user interface.
